# EUROPÄISCHE PATENTSCHRIFT

(11) **EP 4 569 248 B1**
(45) Veröffentlichungstag und Bekanntmachung des Hinweises auf die Patenterteilung: **05.11.2025**
(21) Anmeldenummer: 23783367.8
(22) Anmeldetag: 29.09.2023
(51) Int. Cl.: F16H 63/34, F16H 63/50

(54) **VERFAHREN ZUM BETREIBEN EINER KRAFTFAHRZEUGANTRIEBSSTRANGEINRICHTUNG FÜR EIN KRAFTFAHRZEUG SOWIE ENTSPRECHENDE KRAFTFAHRZEUGANTRIEBSSTRANGEINRICHTUNG**
METHOD FOR OPERATING A MOTOR VEHICLE DRIVE TRAIN UNIT FOR A MOTOR VEHICLE AND CORRESPONDING MOTOR VEHICLE DRIVE TRAIN UNIT
PROCÉDÉ POUR FAIRE FONCTIONNER UNE UNITÉ DE CHAÎNE CINÉMATIQUE DE VÉHICULE AUTOMOBILE POUR UN VÉHICULE AUTOMOBILE ET UNITÉ DE CHAÎNE CINÉMATIQUE DE VÉHICULE AUTOMOBILE CORRESPONDANTE

(30) Priorität: 06.10.2022 DE 102022125811
(43) Veröffentlichungstag der Anmeldung: 18.06.2025
(73) Patentinhaber: AUDI AG, 85057 Ingolstadt (DE)
(72) Erfinder: GUNDLACH, Lutz, 85049 Ingolstadt (DE); KIESEWETTER, Jürgen, 91781 Weißenburg i.B. (DE); SZEPPAT, Enrico, 09328 Lunzenau OT Göritzhain (DE)
(74) Vertreter: Gleiss Große Schrell und Partner mbB
(86) Internationale Anmeldenummer: PCT/EP2023/077169
(87) Internationale Veröffentlichungsnummer: WO 2024/074434

(56) Entgegenhaltungen:
- DE-A1- 102009 030 084
- DE-A1- 102010 011 557
- DE-A1- 102015 217 975
- DE-A1- 102019 113 390
- DE-A1- 102019 219 670

## Beschreibung

Die Erfindung betrifft ein Verfahren zum Betreiben einer Kraftfahrzeugantriebsstrangeinrichtung für ein Kraftfahrzeug, die einen zumindest zeitweise mit wenigstens einem Rad des Kraftfahrzeugs über eine Drehmomentübertragungsanordnung antriebstechnisch verbundenes Motor und eine Parksperrenvorrichtung aufweist, wobei die Parksperrenvorrichtung ein mit der Drehmomentübertragungsanordnung drehfest gekoppeltes Sperrelement in einer ersten Einstellung formschlüssig festsetzt und in einer zweiten Einstellung freigibt und bei einem Umschalten der Parksperrenvorrichtung aus der ersten Einstellung in die zweite Einstellung mittels des Antriebsaggregats ein Ausgleichsdrehmoment auf das Sperrelement erzeugt wird, das einem durch ein Verspannen der Drehmomentübertragungsanordnung bei festgesetztem Sperrelement bewirktem Verspanndrehmoment entgegenwirkt. Die Erfindung betrifft weiterhin eine Kraftfahrzeugantriebsstrangeinrichtung für ein Kraftfahrzeug.

Aus dem Stand der Technik ist beispielsweise die Druckschrift DE 10 2010 011 557 A1 bekannt. Diese beschreibt eine Kraftfahrzeugantriebsstrangeinrichtung mit einer Parksperrenvorrichtung, die dazu vorgesehen ist, einen Kraftfahrzeugantriebsstrang zumindest teilweise formschlüssig zu arretieren, und mit einer Steuer- und/oder Regeleinheit, die dazu vorgesehen ist, in zumindest einem Betriebszustand ein definiertes Antriebsmoment einzustellen. Dabei ist vorgesehen, dass die Steuer- und/oder Regeleinheit dazu vorgesehen ist, zum Lösen der Parksperrenvorrichtung ein zur Reduzierung eines Antriebsstrang-Verspannungsmoments vorgesehenes Kompensations-Antriebsmoment einzustellen.

Weiterhin offenbart die Druckschrift DE 10 2019 219 670 A1 eine Getriebevorrichtung für ein Kraftfahrzeug, umfassend eine Parksperrenvorrichtung, die dazu ausgebildet ist, ein bewegtes Element der Getriebevorrichtung in einem eingelegten Zustand der Parksperrenvorrichtung zumindest zeitweise und/oder bedarfsweise zu sperren und in einem ausgelegten Zustand der Parksperrenvorrichtung freizugeben, wobei die Getriebevorrichtung dazu ausgebildet ist, zum Auslegen der Parksperrenvorrichtung mittels einer der Getriebevorrichtung zugeordneten elektrischen Maschine ein definiertes Drehmoment zu erzeugen, wobei die Getriebevorrichtung dazu ausgebildet ist, durch das Erzeugen des definierten Drehmoments eine Kopplung eines Sperrelements der Getriebevorrichtung an das korrespondierende zu sperrende Element aufzuheben, wobei die Parksperrenvorrichtung dazu ausgebildet ist, bei Vorliegen des definierten Drehmoments mindestens ein Sperrelement in den ausgelegten Zustand zu überführen.

Aus der Druckschrift DE 10 2015 217 975 A1 geht ein Verfahren zum Auslegen einer Parksperre eines Doppelkupplungsgetriebes eines Kraftfahrzeugs, aus der Druckschrift DE 10 2019 113 390 A1 ein Fahrzeugparksystem sowie ein Verfahren zum Ausschalten der Parkhilfe und aus der Druckschrift DE 10 2009 030 084 A1 ein Verfahren zum Lösen einer Parksperre eines Kraftfahrzeugs hervor.

Es ist Aufgabe der Erfindung, ein Verfahren zum Betreiben einer Kraftfahrzeugantriebsstrangeinrichtung für ein Kraftfahrzeug vorzuschlagen, welches gegenüber bekannten Verfahren Vorteile aufweist, insbesondere das Ausgleichsdrehmoment mit hoher Genauigkeit ermittelt, sodass bei einem Lösen der Parksperrenvorrichtung, also bei dem Freigeben des Sperrelements durch die Parksperrenvorrichtung ein ruckartiges Entspannen der Drehmomentübertragungsanordnung vermieden wird.

Dies wird erfindungsgemäß mit einem Verfahren zum Betreiben einer Kraftfahrzeugantriebsstrangeinrichtung für ein Kraftfahrzeug mit den Merkmalen des Anspruchs 1 erreicht. Dabei ist vorgesehen, dass das Ausgleichsdrehmoment aus einem nach dem Festsetzen des Sperrelements ermittelten Verdrehwinkel der Drehmomentübertragungsanordnung und einer Torsionssteifigkeit der Drehmomentübertragungsanordnung ermittelt wird.

Vorteilhafte Ausgestaltungen mit zweckmäßigen Weiterbildungen der Erfindung sind in den abhängigen Ansprüchen angegeben. Es wird darauf hingewiesen, dass die in der Beschreibung erläuterten Ausführungsbeispiele nicht beschränkend sind; vielmehr wird die vorliegende Erfindung durch die nachfolgenden Ansprüche definiert. Das beschriebene Verfahren dient zum Betreiben der Kraftfahrzeugantriebsstrangeinrichtung. Die Kraftfahrzeugantriebsstrangeinrichtung ist vorzugsweise Bestandteil des Kraftfahrzeugs, kann jedoch selbstverständlich auch separat von diesem vorliegen. Die Kraftfahrzeugantriebsstrangeinrichtung dient zum zumindest zeitweisen Herstellen einer antriebstechnischen Verbindung zwischen dem Rad des Kraftfahrzeugs und einer Antriebseinrichtung des Kraftfahrzeugs. Die Antriebseinrichtung dient dem Antreiben des Kraftfahrzeugs, insoweit also dem Bereitstellen eines auf das Antreiben des Kraftfahrzeugs gerichteten Antriebsdrehmoments. Die Antriebseinrichtung weist zum Bereitstellen des Antriebsdrehmoments wenigstens ein Antriebsaggregat auf, welches beispielsweise als Brennkraftmaschine oder als elektrische Maschine beziehungsweise elektrischen Traktionsmaschine ausgestaltet ist.

Die Antriebseinrichtung ist zumindest zeitweise über die Drehmomentübertragungsanordnung der Kraftfahrzeugantriebsstrangeinrichtung mit dem mindestens einen Rad des Kraftfahrzeugs antriebstechnisch verbunden, sodass zwischen der Antriebseinrichtung und dem Rad ein Drehmoment, insbesondere das Antriebsdrehmoment, übertragen wird. Die Drehmomentübertragungsanordnung stellt hierbei eine beliebige Anordnung dar, mittels welcher das Drehmoment zwischen der Antriebseinrichtung und dem Rad des Kraftfahrzeugs übertragbar ist. Im einfachsten Fall ist die Drehmomentübertragungsanordnung eine Welle. Besonders bevorzugt weist die Drehmomentübertragungsanordnung ein Gangwechselgetriebe auf, mittels welchem unterschiedliche Fahrgänge beziehungsweise Übersetzungen zwischen dem Antriebsaggregat und dem Rad einstellbar sind.

Zusätzlich zu der Drehmomentübertragungsanordnung weist die Kraftfahrzeugantriebsstrangeinrichtung den Motor auf. Der Motor ist bevorzugt Bestandteil der bereits erwähnten Antriebseinrichtung, sodass in diesem Fall auch die Kraftfahrzeugantriebsstrangeinrichtung Bestandteil der Antriebseinrichtung des Kraftfahrzeugs ist. Besonders bevorzugt entspricht der Motor dem Antriebsaggregat der Antriebseinrichtung, insbesondere der elektrischen Traktionsmaschine. Alternativ kann der Motor jedoch auch abseits der Antriebseinrichtung vorliegen und beispielsweise als separate elektrische Maschine ausgestaltet sein.

Weiterhin ist die Parksperrenvorrichtung Bestandteil der Kraftfahrzeugantriebsstrangeinrichtung. Die Parksperrenvorrichtung dient dem Blockieren der Drehmomentübertragungsanordnung durch ein zeitweises Festsetzen des Sperrelements, welches mit der Drehmomentübertragungsanordnung drehfest gekoppelt ist. Das Sperrelement ist vorzugsweise über die Drehmomentübertragungsanordnung permanent mit dem Rad antriebstechnisch verbunden. Beispielsweise liegt das Sperrelement als Parksperrenrad, beispielsweise als Sperrklinkenrad, Klauenkupplungsrad oder Zahnrad, vor, welches starr mit einer Welle der Drehmomentübertragungsanordnung verbunden ist.

Mittels der Parksperrenvorrichtung kann das Kraftfahrzeug im Stillstand festgesetzt werden. Die Parksperrenvorrichtung wird bei stillstehendem Kraftfahrzeug aktiviert und blockiert die Drehmomentübertragungsanordnung derart, dass das Rad des Kraftfahrzeugs ebenfalls festgesetzt ist. Hierzu greift in der ersten Einstellung der Parksperrenvorrichtung ein Verriegelungselement formschlüssig an dem Sperrelement an beziehungsweise wirkt formschlüssig mit dem Sperrelement zusammen, um dieses festzusetzen und entsprechend eine Drehbewegung des Sperrelements zu unterbinden. In der zweiten Einstellung der Parksperrenvorrichtung gibt das Verriegelungselement das Sperrelement hingegen frei, sodass sich das Sperrelement frei bewegen beziehungsweise drehen kann und folglich auch das Rad des Kraftfahrzeugs freigegeben ist.

Ist das Kraftfahrzeug beispielsweise an einem Hang abgestellt, so wirkt auf das Rad des Kraftfahrzeugs auch nach dem Festsetzen des Sperrelements ein Drehmoment, welches aufgrund der Verbindung zwischen dem Rad und dem Sperrelement auch auf das Sperrelement ausgeübt wird. Hierdurch wird das Verspannen der Drehmomentübertragungsanordnung mit dem Verspanndrehmoment bewirkt. Das Verspanndrehmoment entspricht hierbei insbesondere dem Drehmoment, welches aufgrund eines Schwerkrafteinflusses auf das Kraftfahrzeug und der resultierenden Hangabtriebskraft sowie des Haftwertbeiwerts zwischen dem Rad und dessen Aufstandsfläche beziehungsweise einem Untergrund auf das Rad ausgeübt wird.

Das Rad des Kraftfahrzeugs liegt insbesondere an einer ersten Radachse des Kraftfahrzeugs vor. Bevorzugt verfügt das Kraftfahrzeug über eine Feststellbremse beziehungsweise Parkbremse, insbesondere eine elektronische Feststellbremse. Die Feststellbremse dient insbesondere dazu, wenigstens ein Rad wenigstens einer Radachse des Kraftfahrzeug, insbesondere einer zweiten Radachse des Kraftfahrzeugs, bevorzugt alle Räder der jeweiligen Radachse, festzusetzen, insbesondere im Stillstand des Kraftfahrzeugs. Die erste Radachse liegt beispielsweise als Vorderradachse und die zweite Radachse als Hinterradachse vor oder umgekehrt. Ist die Feststellbremse zum Festsetzen der jeweiligen Radachse eingestellt, so kann dies das Verspanndrehmoment beeinflussen, insbesondere seinen Absolutwert verringern.

Das Verspanndrehmoment wirkt zwischen dem Sperrelement und dem Verriegelungselement. Bei dem Lösen der Parksperrenvorrichtung, also bei dem Wechsel von der ersten Einstellung in die zweite Einstellung, muss die Parksperrenvorrichtung das Verspanndrehmoment überwinden, um das formschlüssige Festsetzen des Sperrelements zu beenden. Dies führt zum einen dazu, dass die Parksperrenvorrichtung hinreichend dimensioniert sein muss, um auch bei großen Verspanndrehmomenten zuverlässig das Sperrelement freigeben zu können. Zum anderen kann es, in Abhängigkeit von der Größe des Verspanndrehmoment, bei dem Lösen der Parksperrenvorrichtung zu einer ungewünschte Geräuschbildung und/oder zu einer Ruck des Kraftfahrzeugs kommen.

Um dies zu vermeiden, ist es vorgesehen, dass bei dem Umschalten der Parksperrenvorrichtung aus der ersten Einstellung in die zweite Einstellung mittels des Motors das Ausgleichsdrehmoment auf das Sperrelement erzeugt wird. Das Ausgleichsdrehmoment ist hierbei derart gewählt, dass es dem Verspanndrehmoment entgegenwirkt, welches durch das Verspannen der Drehmomentübertragungsanordnung bei festgesetztem Sperrelement aufgetreten ist. Das mittels des Motors zu bewirkende Ausgleichsdrehmoment kann beispielsweise in Abhängigkeit von einem Neigungswinkel des Kraftfahrzeugs ermittelt werden.

Dies ist jedoch häufig nicht genau genug. Wird beispielsweise das Kraftfahrzeug derart abgestellt, dass das Rad auf einer Bordsteinkante steht, so kann ein Verspanndrehmoment auftreten, welches deutlich von demjenigen abweicht, welches allein durch den Neigungswinkel des Kraftfahrzeugs bewirkt werden würde. Aus diesem Grund ist es vorgesehen, das Ausgleichsdrehmoment auf einem anderen Weg zu ermitteln, insbesondere unabhängig von dem Neigungswinkel des Kraftfahrzeugs.

Hierbei finden der Verdrehwinkel der Drehmomentübertragungsanordnung und ihre Torsionssteifigkeit Anwendung. Der Verdrehwinkel beschreibt denjenigen Winkel, um welchen die Drehmomentübertragungsanordnung nach dem Festsetzen des Sperrelements verdreht wird beziehungsweise verdreht wurde. Anhand des Verdrehwinkels und der bekannten Torsionssteifigkeit der Drehmomentübertragungsanordnung kann unmittelbar das Ausgleichsdrehmoment bestimmt werden. Die Torsionssteifigkeit wird beispielsweise durch das Direktionsmoment beschrieben, welches eine Proportionalitätskonstante zwischen dem Ausgleichsdrehmoment und dem Verdrehwinkel darstellt. Das Ausgleichsdrehmoment ergibt sich in diesem Fall aus einer Multiplikation des die Torsionssteifigkeit beschreibenden Direktionsmoments und des Verdrehwinkels. Die Torsionssteifigkeit beziehungsweise das Direktionsmoment wird zum Beispiel auf einem Prüfstand ermittelt, bevorzugt gemessen. Die gemessene Torsionssteifigkeit wird vorzugsweise in einem Steuergerät der Kraftfahrzeugantriebsstrangeinrichtung beziehungsweise des Kraftfahrzeugs hinterlegt. Die Torsionssteifigkeit ist vorzugsweise konstant hinterlegt, sie ist also zumindest während eines Fahrbetriebs des Kraftfahrzeugs unveränderlich.

Der Verdrehwinkel der Drehmomentübertragungsanordnung wird an einer Verdrehwinkelermittlungsstelle ermittelt. Die Verdrehwinkelermittlungsstelle kann grundsätzlich beliebig gewählt sein, beispielsweise liegt sie an dem Rad beziehungsweise einem Radträger vor, an welchem das Rad montiert beziehungsweise montierbar ist. Bei dem Ermitteln des Ausgleichsdrehmoments findet selbstredend die Torsionssteifigkeit der Drehmomentübertragungsanordnung zwischen der Verdrehwinkelermittlungsstelle und dem Sperrelement Berücksichtigung, um das Ausgleichsdrehmoment mit hoher Genauigkeit zu ermitteln. Mithilfe der beschriebenen Vorgehensweise kann unter Verwendung des Motors das Verspanndrehmoment unter zahlreichen Randbedingungen ausgeglichen oder zumindest nahezu ausgeglichen werden, sodass das Freigeben des Sperrelements mit geringem Aufwand und ohne störende Begleiterscheinungen möglich ist.

Eine Weiterbildung der Erfindung sieht vor, dass die Drehmomentübertragungsanordnung ein Getriebe, insbesondere ein Gangwechselgetriebe, aufweist und als Getriebe beziehungsweise Gangwechselgetriebe ein die Parksperrenvorrichtung aufweisendes Getriebe beziehungsweise Gangwechselgetriebe verwendet wird. In anderen Worten ist die Parksperrenvorrichtung Bestandteil des Getriebes und das Getriebe wiederum Bestandteil der Drehmomentübertragungsanordnung und damit der Kraftfahrzeugantriebsstrangeinrichtung. Das Getriebe kann ein Getriebe mit einem unveränderlichen und konstanten Übersetzungsverhältnis sein. Zwischen einer Getriebeeingangswelle und einer Getriebeausgangswelle des Getriebes und damit zwischen der Antriebseinrichtung und dem Rad des Kraftfahrzeugs liegt daher stets dasselbe Übersetzungsverhältnis vor.

Das Getriebe kann allerdings auch als Gangwechselgetriebe ausgestaltet sein. Das Gangwechselgetriebe dient dem Einstellen unterschiedlicher Fahrgänge beziehungsweise Übersetzungen zwischen der Antriebseinrichtung und dem Rad des Kraftfahrzeugs. Hierzu wird aus den Fahrgängen des Gangwechselgetriebes ein Fahrgang ausgewählt und an dem Gangwechselgetriebe eingestellt, sodass die dem Fahrgang entsprechende Übersetzung zwischen der Antriebseinrichtung und dem Rad vorliegt.

Vorzugsweise ist die Eingangswelle des Getriebes an die Antriebseinrichtung angeschlossen, insbesondere über eine Anfahrkupplung. Die Ausgangswelle des Getriebes ist bevorzugt starr und permanent mit dem Rad des Kraftfahrzeugs antriebstechnisch verbunden. Das Sperrelement ist ebenfalls dem Getriebe zugeordnet, beispielsweise ist es starr auf der Ausgangswelle angeordnet und befestigt. Bei dem Erzeugen des Ausgleichsdrehmoments mittels des Motors wird selbstverständlich das über das Getriebe vorliegende beziehungsweise das an dem Gangwechselgetriebe eingestellte Übersetzungsverhältnis berücksichtigt. Das bedeutet, dass der Motor ein Motordrehmoment bereitstellt, welches mithilfe des Getriebes und seines Übersetzungsverhältnisses beziehungsweise mithilfe des Gangwechselgetriebes und des an diesem eingestellten Übersetzungsverhältnisses in das Ausgleichsdrehmoment umgesetzt wird. Die beschriebene Ausgestaltung ermöglicht eine einfache Umsetzung des Verfahrens gemäß dieser Beschreibung.

Eine Weiterbildung der Erfindung sieht vor, dass der Verdrehwinkel mittels eines Drehimpulsgebers gemessen wird. Der Drehimpulsgeber ist ein Inkrementalgeber, mittels welchem eine Drehbewegung beziehungsweise deren Ausmaß ermittelt werden kann. Eine Drehbewegung der Drehmomentübertragungsanordnung bewirkt das Erzeugen von einem oder mehreren Drehimpulsen durch den Drehimpulsgeber, wobei jeder der Drehimpulse einer bestimmten Verdrehwinkeldifferenz entspricht. Der Verdrehwinkel ergibt sich insoweit aus der Anzahl der von dem Drehimpulsgeber erzeugten Drehimpulse und der Verdrehwinkeldifferenz. Hierdurch werden die bereits erläuterten Vorteile erzielt.

Eine Weiterbildung der Erfindung sieht vor, dass als Drehimpulsgeber ein eine Drehzahl des Rads messender Drehimpulsgeber verwendet wird. Der Drehimpulsgeber liegt insoweit beispielsweise als Radsensor, vorzugsweise als Raddrehzahlsensor, vor. Er ist insbesondere an einer Radnabe angeordnet, welche Bestandteil der Kraftfahrzeugantriebsstrangeinrichtung ist und über welche das Rad des Kraftfahrzeugs mit dieser antriebstechnisch koppelbar ist. Die Messung der Drehzahl des Rads beziehungsweise des Verdrehwinkels des Rads ermöglicht eine besonders genaue Ermittlung des Ausgleichsdrehmoments.

Eine Weiterbildung der Erfindung sieht vor, dass bei dem Ermitteln des Ausgleichsdrehmoments zusätzlich eine Längsbeschleunigung des Kraftfahrzeugs berücksichtigt wird. Die Längsbeschleunigung findet insbesondere dann Verwendung, falls der Drehimpulsgeber keine Aussage über die Drehrichtung der Drehmomentübertragungsanordnung an der Verdrehwinkelermittlungsstelle liefert. Dann wird die Längsbeschleunigung herangezogen, um die Drehrichtung zu ermitteln und festzustellen, ob der Drehimpuls ein Vergrößern oder ein Verkleinern des Verspanndrehmoments und entsprechend des Ausgleichsdrehmoments bewirkt. Insbesondere wird anhand der Längsbeschleunigung auf das Vorzeichen des Verspanndrehmoments und damit des Ausgleichsdrehmoments geschlossen und so eine besonders genaue Ermittlung des Ausgleichsdrehmoments ermöglicht. Die Längsbeschleunigung wird vorzugsweise mittels eines Beschleunigungssensors gemessen. Der Beschleunigungssensor ist besonders bevorzugt Bestandteil eines ESP-Systems und damit ohnehin Bestandteil der Kraftfahrzeugantriebsstrangeinrichtung beziehungsweise des Kraftfahrzeugs.

Eine Weiterbildung der Erfindung sieht vor, dass als Verdrehwinkel eine Drehwinkeldifferenz zwischen einem bei dem Festlegen des Sperrelements vorliegenden ersten Drehwinkel der Drehmomentübertragungsanordnung und einem vor dem Freigeben des Sperrelements vorliegenden zweiten Drehwinkel der Drehmomentübertragungsanordnung verwendet wird. Der Verdrehwinkel baut sich nach dem Festsetzen des Sperrelements über der Zeit auf. Üblicherweise wird dies über einen vergleichsweise kurzen Zeitraum erfolgen, nämlich ab dem Festsetzen des Sperrelements bis zu einem vollständigen Stillstand des Kraftfahrzeugs. Der Verdrehwinkel liegt insoweit in Form der Drehwinkeldifferenz zwischen dem ersten Drehwinkel und dem zweiten Drehwinkel vor.

Die Drehmomentübertragungsanordnung liegt unter dem ersten Drehwinkel vor, wenn das Sperrelement festgelegt wird beziehungsweise unmittelbar nach seinem Festlegen. Der zweite Drehwinkel der Drehmomentübertragungsanordnung stellt sich nachfolgend über der Zeit ein. Es kann vorgesehen sein, dass der zweite Drehwinkel eine bestimmte Zeitspanne nach dem Ermitteln des ersten Drehwinkel bestimmt und der Drehwinkel berechnet wird. Beispielsweise wird der zweite Drehwinkel ermittelt, sobald ein Stillstand des Kraftfahrzeugs festgestellt wurde. Besonders bevorzugt wird jedoch der zweite Drehwinkel erst unmittelbar vor dem Freigeben des Sperrelements bestimmt, um die Drehwinkeldifferenz und folglich den Verdrehwinkel mit besonders hoher Genauigkeit zu ermitteln. In diesem Fall wird also der Verdrehwinkel erfasst, der sich über die gesamte Zeitspanne zwischen dem Festlegen des Sperrelements und seinem Freigeben aufgebaut hat.

Eine Weiterbildung der Erfindung sieht vor, dass das Ermitteln des Verdrehwinkels ab dem Festsetzen des Sperrelements bis unmittelbar vor dem Freigeben des Sperrelements durchgeführt wird. Auf diese Vorgehensweise wurde bereits hingewiesen. Sie ermöglicht das Ermitteln des Verdrehwinkels mit besonders hoher Genauigkeit.

Eine Weiterbildung der Erfindung sieht vor, dass der Verdrehwinkel integral aus einem Signal des Drehimpulsgebers und der Längsbeschleunigung ermittelt wird. Das Signal des Drehimpulsgebers umfasst wie bereits erläutert einen oder mehrere Drehimpulse. Anhand diesen und einer den Drehimpulsen zugeordneten Drehwinkeldifferenz kann der Verdrehwinkel integral ermittelt, also durch Aufsummieren bestimmt werden. Das Vorzeichen jedes Summanden, entsprechend der Drehwinkeldifferenz, wird hierbei anhand der Längsbeschleunigung ermittelt. Die Längsbeschleunigung gibt insoweit einen Hinweis darauf, ob bei Auftreten des Drehimpulses der Verdrehwinkel um die Verdrehwinkeldifferenz größer oder kleiner wird. Auch hierdurch werden die erwähnten Vorteile erzielt.

Eine Weiterbildung der Erfindung sieht vor, dass bei einem Abschalten eines das Ermitteln des Verdrehwinkels vornehmenden Steuergeräts bei festgesetztem Sperrelement ein momentaner Wert des Verdrehwinkels abgespeichert und bei einem Einschalten des Steuergeräts das Ermitteln des Verdrehwinkels auf Grundlage des abgespeicherten Werts fortgeführt wird. Das Steuergerät ist Bestandteil der Kraftfahrzeugantriebsstrangeinrichtung. Es wird üblicherweise nach Verstreichen einer bestimmten Zeitspanne nach einem Abstellen beziehungsweise Parken des Kraftfahrzeugs abgeschaltet. Das abgeschaltete Steuergerät überwacht Veränderungen des Verdrehwinkels nicht mehr beziehungsweise wertet die von dem Drehimpulsgeber erzeugten Drehimpulse nicht mehr aus. Dennoch soll der bis zu dem Abschalten des Steuergeräts ermittelte Verdrehwinkel erhalten bleiben, um das Ausgleichsdrehmoment bei dem Freigeben des Sperrelements mit hoher Genauigkeit bereitstellen zu können.

Aus diesem Grund wird der momentane Wert des Verdrehwinkels bei dem Abschalten des Steuergeräts abgespeichert. In anderen Worten wird der momentane Wert des Verdrehwinkels abgespeichert, falls das Steuergerät abgeschaltet wird, während das Sperrelement festgesetzt ist. Wird das Steuergerät später - bei weiterhin festgesetztem Sperrelement - wieder eingeschaltet, so wird das Ermitteln des Haltewinkels auf Grundlage des abgespeicherten Werts fortgeführt. Das bedeutet insbesondere, dass das Ausgleichsdrehmoment auf Grundlage des abgespeicherten Werts ermittelt wird, wenn der Motor zum Erzeugen des Ausgleichsdrehmoments angesteuert werden soll beziehungsweise angesteuert wird. Zusätzlich wird vorzugsweise eine Änderung des Verdrehwinkel berücksichtigt, die nach dem Wiedereinschalten des Steuergeräts und vor dem Freigeben des Sperrelements erfolgt. Die beschriebene Vorgehensweise hat den Vorteil, dass der bereits ermittelte Wert des für den Verdrehwinkel erhalten bleiben, sodass bei dem Freigeben des Sperrelements der Motor zielgerichtet zum Erzeugen des Ausgleichsdrehmoments angesteuert werden kann.

Die Erfindung betrifft weiterhin eine Kraftfahrzeugantriebsstrangeinrichtung für ein Kraftfahrzeug gemäß dem unabhängigen Anspruch 10. Auf die Vorteile einer derartigen Ausgestaltung der Kraftfahrzeugantriebsstrangeinrichtung sowie der erläuterten Vorgehensweise wurde bereits hingewiesen. Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen, wobei die Erfindung durch die nachfolgenden Ansprüche definiert wird.

Es sind somit auch Ausführungsformen als von der Erfindung umfasst anzusehen, die in der Beschreibung und/oder den Figuren nicht explizit gezeigt oder erläutert sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Kraftfahrzeugs in einer ersten Parksituation,
- Figur 2: ein Diagramm, in welchem ein Verlauf eines Signals eines Drehimpulsgebers sowie ein ein Verlauf einer Längsbeschleunigung des Kraftfahrzeugs über der Zeit für die erste Parksituation aufgetragen sind,
- Figur 3: eine schematische Darstellung des Kraftfahrzeugs in einer zweiten Parksituation, sowie
- Figur 4: ein Diagramm, in welchem der Verlauf des Signals des Drehimpulsgebers sowie der Verlauf der Längsbeschleunigung für die zweite Parksituation über der Zeit aufgetragen sind.

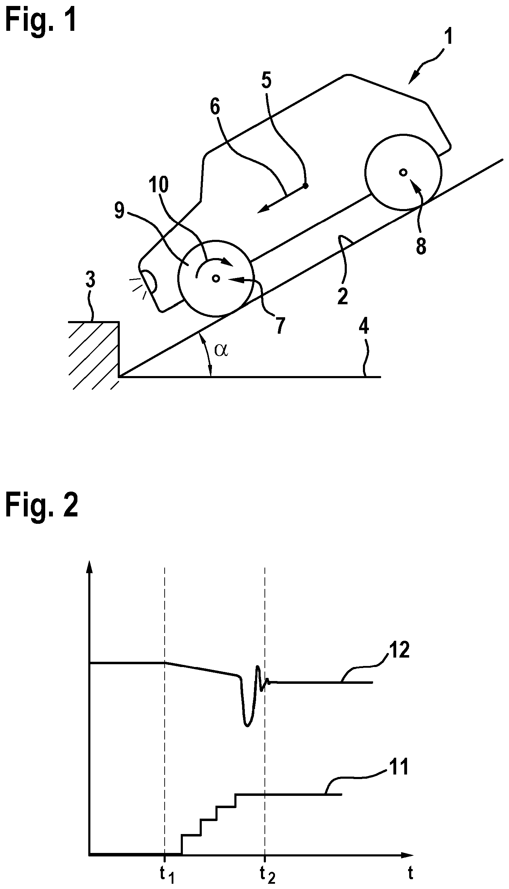

Die Figur 1 zeigt eine schematische Darstellung eines Kraftfahrzeugs 1 in einer ersten Parksituation, in welcher das Kraftfahrzeug 1 auf einem abschüssigen Untergrund 2 beabstandet von einem Bordstein 3 abgestellt beziehungsweise geparkt ist. Der Untergrund 2 weist hierbei bezüglich einer geodätisch waagerechten Ebene 4 einen Winkel α. Das bedeutet, dass auf das Kraftfahrzeug 1 ausgehend von einem Schwerpunkt 5 des Kraftfahrzeugs 1 eine Längsbeschleunigung wirkt, die durch den Pfeil 6 angedeutet ist und von der auf das Kraftfahrzeug 1 wirkenden Schwerkraft und dem Winkel α abhängt.

Das Kraftfahrzeug 1 verfügt über mehrere Radachsen 7 und 8, wobei die Radachse 7 eine Vorderradachse und die Radachse 8 eine Hinterradachse ist. In dem hier dargestellten Ausführungsbeispiel ist die Radachse 7 eine angetriebene Radachse, wenigstens ein an ihr vorliegendes Rad 9 ist entsprechend an eine hier nicht dargestellte Antriebseinrichtung antriebstechnisch angeschlossen. Die Antriebseinrichtung ist zumindest zeitweise über eine ebenfalls nicht gezeigte Drehmomentübertragungsanordnung einer Kraftfahrzeugantriebsstrangeinrichtung antriebstechnisch mit dem Rad 9 gekoppelt.

Die Drehmomentübertragungsanordnung verfügt über ein Sperrelement, welches mittels einer Parksperrenvorrichtung formschlüssig festsetzbar ist, nämlich in einer ersten Einstellung der Parksperrenvorrichtung. In einer zweiten Einstellung der Parksperrenvorrichtung ist das Sperrelement hingegen freigegeben. Nach dem Abstellen des Kraftfahrzeugs 1 und dem Festsetzen des Sperrelements mittels der Parksperrenvorrichtung wirkt auf das Rad 9 ein Verspanndrehmoment, welches von der durch den Pfeil 6 angedeuteten Längsbeschleunigung bewirkt wird.

Um das Freigeben des Sperrelements zu erleichtern, soll daher mittels eines Motors, welcher vorzugsweise Bestandteil der Antriebseinrichtung ist und insbesondere als elektrische Maschine vorliegt, ein Ausgleichsdrehmoment erzeugt werden, das dem Verspanndrehmoment entgegenwirkt. Das Ermitteln dieses Ausgleichsdrehmoments erfolgt nach dem Festsetzen des Sperrelements durch ein Ermitteln eines Verdrehwinkels der Drehmomentübertragungsanordnung. Aus dem Verdrehwinkel wird unter Verwendung einer bekannten Torsionssteifigkeit der Drehmomentübertragungsanordnung das Ausgleichsdrehmoment berechnet.

Die Figur 2 zeigt ein Diagramm, in welchem Verläufe 11 und 12 über der Zeit aufgetragen sind. Der Verlauf 11 zeigt ein Signal eines Drehimpulsgebers, welcher dem Rad 9 zugeordnet ist. Der Verlauf 11 beschreibt also eine Drehbewegung des Rads 9 vor, während und nach dem Festsetzen des Sperrelements. In einem Zeitpunkt t₁ wird das Sperrelement festgesetzt. Nachfolgend bewegt sich das Kraftfahrzeug 1 aufgrund des auf ihn wirkenden Schwerkrafteinflusses noch geringfügig weiter, nämlich bis der Zeitpunkt t₂ erreicht ist. Dies zeigt sich in dem Verlauf 11, welcher mehrere Drehimpulse des Drehimpulsgebers andeutet und entsprechend eine von dem Rad 9 zurückgelegte Strecke. Der Verlauf 12 zeigt die korrespondierende Längsbeschleunigung des Kraftfahrzeugs 1.

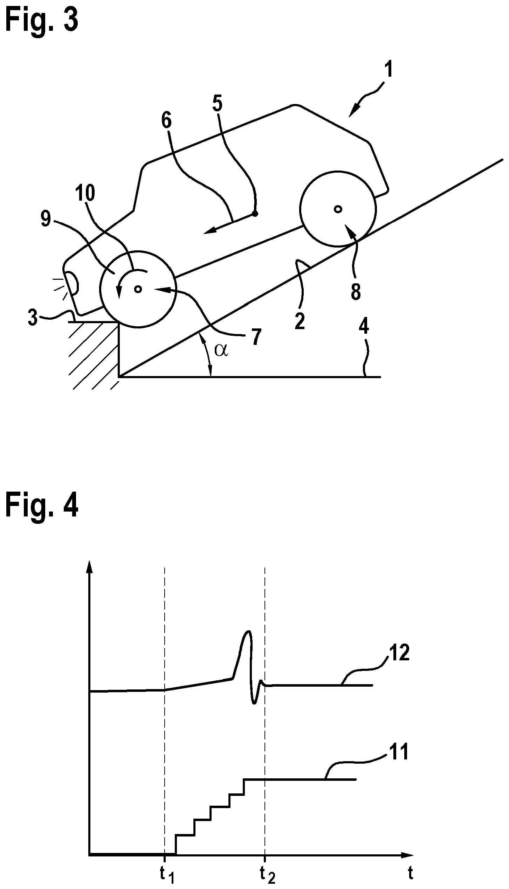

Die Figur 3 zeigt das Kraftfahrzeug 3 in einer zweiten Parksituation. In dieser ist das Kraftfahrzeug 1 derart abgestellt, dass das Rad 9 auf einer Bordsteinkante des Bordsteins 3 steht. Das bedeutet, dass zwar grundsätzlich die durch den Pfeil 6 angedeutete und von der Schwerkraft auf das Kraftfahrzeug 1 ausgeübte Längsbeschleunigung ähnlich ist wie in der ersten Parksituation. Das auf das Rad 9 wirkende Drehmoment, welches durch den Pfeil 10 angedeutet ist, verläuft jedoch in entgegengesetzter Richtung, nämlich aufgrund der Radaufstandskraft und des sich ergebenden wirksamen Hebelarms am Radaufstandspunkt der Bordsteinkante. Bei einer Bestimmung des Ausgleichsdrehmoments allein anhand des Winkels α beziehungsweise der Neigung des Untergrunds 2, könnte dies keine Berücksichtigung finden und zu einem fehlerhaftem Wert des Ausgleichsdrehmoments führen.

Die Figur 4 zeigt ein Diagramm, in welchen wiederum die Verläufe 11 und 12 gezeigt sind, nämlich für die zweite Parksituation. Aus dem Verlauf 11 wird deutlich, dass das Verspanndrehmoment ähnlich groß ist wie das für die erste Parksituation, da eine ähnliche Anzahl an Drehimpulsen auftritt. Das Vorzeichen des Verspanndrehmoment und damit des benötigten Ausgleichsdrehmoments ist jedoch genau umgekehrt, wie durch den Pfeil 10 angedeutet. Aus diesem Grund wird bei dem Ermitteln des Ausgleichsdrehmoments nicht nur der Verdrehwinkel der Drehmomentübertragungsanordnung herangezogen, sondern auch die Längsbeschleunigung des Kraftfahrzeugs 1 gemäß Verlauf 12, welche die Verlagerungsrichtung des Kraftfahrzeugs 1 während des Verspannens der Drehmomentübertragungsanordnung beschreibt.

Mit der beschriebenen Vorgehensweise ist ein äußerst genaues Ermitteln des zum Entspannen der Drehmomentübertragungsanordnung benötigten Ausgleichsdrehmoments möglich. Das Freigeben des Sperrelements durch die Parksperrenvorrichtung ist somit mit einem hohen Komfort für die Insassen des Kraftfahrzeugs möglich.

### BEZUGSZEICHENLISTE:

- 1: Kraftfahrzeug
- 2: Untergrund
- 3: Bordstein
- 4: Ebene
- 5: Schwerpunkt
- 6: Pfeil
- 7: Radachse
- 8: Radachse
- 9: Rad
- 10: Pfeil
- 11: Verlauf
- 12: Verlauf

## Patentansprüche

1. Verfahren zum Betreiben einer Kraftfahrzeugantriebsstrangeinrichtung für ein Kraftfahrzeug (1), die einen zumindest zeitweise mit mindestens einem Rad (9) des Kraftfahrzeugs (1) über eine Drehmomentübertragungsanordnung antriebstechnisch verbundenen Motor und eine Parksperrenvorrichtung aufweist, wobei die Parksperrenvorrichtung ein mit der Drehmomentübertragungsanordnung drehfest gekoppeltes Sperrelement in einer ersten Einstellung formschlüssig festsetzt und in einer zweiten Einstellung freigibt und bei einem Umschalten der Parksperrenvorrichtung aus der ersten Einstellung in die zweite Einstellung mittels des Motors ein Ausgleichsdrehmoment auf das Sperrelement erzeugt wird, das einem durch ein Verspannen der Drehmomentübertragungsanordnung bei festgesetztem Sperrelement bewirktem Verspanndrehmoment entgegenwirkt, **dadurch gekennzeichnet, dass** das Ausgleichsdrehmoment aus einem nach dem Festsetzen des Sperrelements ermittelten Verdrehwinkel der Drehmomentübertragungsanordnung und einer Torsionssteifigkeit der Drehmomentübertragungsanordnung ermittelt wird.

2. Verfahren nach Anspruch 1, **dadurch gekennzeichnet, dass** die Drehmomentübertragungsanordnung ein Getriebe aufweist und als Getriebe ein die Parksperrenvorrichtung aufweisendes Getriebe verwendet wird.

3. Verfahren nach einem der vorhergehenden Ansprüche, **dadurch gekennzeichnet, dass** der Verdrehwinkel mittels eines Drehimpulsgebers gemessen wird.

4. Verfahren nach Anspruch 3, **dadurch gekennzeichnet, dass** als Drehimpulsgeber ein eine Drehzahl des Rads (9) messender Drehimpulsgeber verwendet wird.

5. Verfahren nach einem der vorhergehenden Ansprüche, **dadurch gekennzeichnet, dass** bei dem Ermitteln des Ausgleichsdrehmoments zusätzlich eine Längsbeschleunigung des Kraftfahrzeugs berücksichtigt wird.

6. Verfahren nach einem der vorhergehenden Ansprüche, **dadurch gekennzeichnet, dass** als Verdrehwinkel eine Drehwinkeldifferenz zwischen einem bei dem Festlegen des Sperrelements vorliegenden ersten Drehwinkel der Drehmomentübertragungsanordnung und einem vor dem Freigeben des Sperrelements vorliegenden zweiten Drehwinkel der Drehmomentübertragungsanordnung verwendet wird.

7. Verfahren nach einem der vorhergehenden Ansprüche, **dadurch gekennzeichnet, dass** das Ermitteln des Verdrehwinkels ab dem Festsetzen des Sperrelements bis unmittelbar vor dem Freigeben des Sperrelements durchgeführt wird.

8. Verfahren nach den Ansprüchen 3 und 5, **dadurch gekennzeichnet, dass** der Verdrehwinkel integral aus einem Signal des Drehimpulsgebers und der Längsbeschleunigung ermittelt wird.

9. Verfahren nach einem der vorhergehenden Ansprüche, **dadurch gekennzeichnet, dass** bei einem Abschalten eines das Ermitteln des Verdrehwinkels vornehmenden Steuergeräts bei festgesetztem Sperrelement ein momentaner Wert des Verdrehwinkels abgespeichert und bei einem Einschalten des Steuergeräts das Ermitteln des Haltewinkels auf Grundlage des abgespeicherten Werts fortgeführt wird.

10. Kraftfahrzeugantriebsstrangeinrichtung für ein Kraftfahrzeug (1), insbesondere zur Durchführung des Verfahrens nach einem oder mehreren der vorhergehenden Ansprüche, die einen zumindest zeitweise mit mindestens einem Rad des Kraftfahrzeugs über eine Drehmomentübertragungsanordnung antriebstechnisch verbundenen Motor und eine Parksperrenvorrichtung aufweist, wobei die Parksperrenvorrichtung ein mit der Drehmomentübertragungsanordnung drehfest gekoppeltes Sperrelement in einer ersten Einstellung formschlüssig festsetzt und in einer zweiten Einstellung freigibt, und wobei die Kraftfahrzeugantriebsstrangeinrichtung dazu vorgesehen und ausgestaltet ist, bei einem Umschalten der Parksperrenvorrichtung aus der ersten Einstellung in die zweite Einstellung mittels des Motors ein Ausgleichsdrehmoment auf das Sperrelement zu erzeugen, das einem durch ein Verspannen der Drehmomentübertragungsanordnung bei festgesetztem Sperrelement bewirktem Verspanndrehmoment entgegenwirkt, **dadurch gekennzeichnet, dass** die Kraftfahrzeugantriebsstrangeinrichtung zudem dazu vorgesehen und ausgestaltet ist, das Ausgleichsdrehmoment aus einem nach dem Festsetzen des Sperrelements ermittelten Verdrehwinkel der Drehmomentübertragungsanordnung und einer Torsionssteifigkeit der Drehmomentübertragungsanordnung zu ermitteln.

## Claims

1. Method for operating a motor vehicle drive train unit for a motor vehicle (1), which comprises an engine, which is propulsively connected at least temporarily to at least one wheel (9) of the motor vehicle (1) via a torque transmission assembly, and a parking lock device, wherein the parking lock device fixes a locking element, which is rotationally coupled to the torque transmission assembly, form-fittingly in a first setting and releases it in a second setting, and wherein, when the parking lock device is switched from the first setting to the second setting, a compensating torque is generated on the locking element by means of the engine, which counteracts a tensioning torque caused by tensioning the torque transmission assembly when the locking element is fixed, **characterised in that** the compensating torque is determined from a torsional angle of the torque transmission assembly determined after fixing the locking element and a torsional stiffness of the torque transmission assembly.

2. Method according to claim 1, **characterised in that** the torque transmission assembly comprises a gearbox and a gearbox comprising the parking lock device is used as the gearbox.

3. Method according to one of the preceding claims, **characterised in that** the torsional angle is measured by means of a rotary encoder.

4. Method according to claim 3, **characterised in that** a rotary encoder measuring the rotational speed of the wheel (9) is used as the rotary encoder.

5. Method according to one of the preceding claims, **characterised in that**, when determining the compensating torque, the longitudinal acceleration of the motor vehicle is taken into account.

6. Method according to one of the preceding claims, **characterised in that** the torsional angle used is a torsional angle difference between a first torsional angle of the torque transmission assembly present when the locking element is fixed and a second torsional angle of the torque transmission assembly present before the locking element is released.

7. Method according to one of the preceding claims, **characterised in that** the determination of the torsional angle is carried out from the fixing of the locking element until immediately before the release of the locking element.

8. Method according to claims 3 and 5, **characterised in that** the torsional angle is determined integrally from a signal from the rotary encoder and the longitudinal acceleration.

9. Method according to one of the preceding claims, **characterised in that** when a control device determining the torsional angle is switched off while the locking element is fixed, a present value of the torsional angle is stored and, when the control device is switched on, the determination of the holding angle is continued based on the stored value.

10. Motor vehicle drive train unit for a motor vehicle (1), in particular for carrying out the method according to one or more of the preceding claims, which comprises an engine, which is propulsively connected at least temporarily to at least one wheel of the motor vehicle via a torque transmission assembly, and a parking lock device, wherein the parking lock device fixes a locking element, which is rotationally coupled to the torque transmission assembly, form-fittingly in a first setting and releases it in a second setting, wherein the motor vehicle drive train unit is provided and configured to generate a compensating torque on the locking element, when the parking lock device is switched from the first setting to the second setting by means of the engine, which counteracts the tensioning torque caused by tensioning the torque transmission assembly when the locking element is fixed, **characterised in that** the motor vehicle drive train unit is also provided and configured to determine the compensating torque from a torsional angle of the torque transmission assembly determined after fixing the locking element and a torsional stiffness of the torque transmission assembly.

## Revendications

1. Procédé pour faire fonctionner une unité de chaîne cinématique de véhicule automobile pour un véhicule automobile (1) qui comprend un moteur relié au moins temporairement à au moins une roue (9) du véhicule automobile (1) par l'intermédiaire d'un dispositif de transmission de couple et un dispositif de blocage de stationnement, dans lequel le dispositif de blocage de stationnement fixe par complémentarité de forme un élément de blocage couplé de manière solidaire en rotation à l'agencement de transmission de couple dans une première position et le libère dans une deuxième position, et lors d'une commutation du dispositif de blocage de stationnement de la première position à la deuxième position, un couple de compensation est généré sur l'élément de blocage au moyen du moteur, qui agit contre un couple de serrage provoqué par un serrage du dispositif de transmission de couple lorsque l'élément de blocage est fixé, **caractérisé en ce que** le couple de compensation est déterminé à partir d'un angle de rotation du dispositif de transmission de couple, déterminé après la fixation de l'élément de blocage, et d'une rigidité en torsion du dispositif de transmission de couple.

2. Procédé selon la revendication 1, **caractérisé en ce que** le dispositif de transmission de couple comprend un engrenage et qu'un engrenage comportant le dispositif de blocage de stationnement est utilisé comme engrenage.

3. Procédé selon l'une des revendications précédentes, **caractérisé en ce que** l'angle de rotation est mesuré à l'aide d'un codeur angulaire.

4. Procédé selon la revendication 3, **caractérisé en ce qu'**un codeur angulaire mesurant la vitesse de rotation de la roue (9) est utilisé comme codeur angulaire.

5. Procédé selon l'une des revendications précédentes, **caractérisé en ce que,** lors du calcul du couple de compensation, l'accélération longitudinale du véhicule automobile est également prise en compte.

6. Procédé selon l'une des revendications précédentes, **caractérisé en ce que** l'angle de rotation utilisé est la différence entre un premier angle de rotation du dispositif de transmission de couple, présent lors de la fixation de l'élément de blocage, et un second angle de rotation du dispositif de transmission de couple, présent avant le déblocage de l'élément de blocage.

7. Procédé selon l'une des revendications précédentes, **caractérisé en ce que** la détermination de l'angle de rotation est effectuée à partir du moment où l'élément de blocage est fixé jusqu'au déblocage de l'élément de blocage.

8. Procédé selon les revendications 3 et 5, **caractérisé en ce que** l'angle de rotation est déterminé intégralement à partir d'un signal du codeur angulaire et de l'accélération longitudinale.

9. Procédé selon l'une des revendications précédentes, **caractérisé en ce que,** en cas de mise hors tension d'un appareil de commande déterminant l'angle de rotation avec un élément de blocage fixé, une valeur instantanée de l'angle de rotation est enregistrée et, lors de la mise sous tension de l'appareil de commande, la détermination de l'angle de maintien se poursuit sur la base de la valeur enregistrée.

10. Unité de chaîne cinématique de véhicule automobile pour un véhicule automobile (1), en particulier pour la mise en œuvre du procédé selon une ou plusieurs des revendications précédentes, qui comprend un moteur relié au moins temporairement à au moins une roue du véhicule automobile par l'intermédiaire d'un dispositif de transmission de couple et un dispositif de blocage de stationnement, dans lequel le dispositif de blocage de stationnement fixe par complémentarité de forme un élément de blocage couplé de manière solidaire en rotation à l'agencement de transmission de couple dans une première position et le libère dans une deuxième position, et dans lequel l'unité de chaîne cinématique de véhicule automobile est prévue et conçue pour générer, lors d'une commutation du dispositif de blocage de stationnement de la première position à la deuxième position au moyen du moteur, un couple de compensation sur l'élément de blocage qui agit contre un couple de serrage provoqué par un serrage du dispositif de transmission de couple lorsque l'élément de blocage est fixé, **caractérisé en ce que** l'unité de chaîne cinématique de véhicule automobile est en outre prévue et conçue pour déterminer le couple de compensation à partir d'un angle de rotation du dispositif de transmission de couple déterminé après la fixation de l'élément de blocage et d'une rigidité en torsion du dispositif de transmission de couple.
